# FASCICULE DE BREVET EUROPEEN

(11) **EP 0 584 013 B1**
(45) Date de publication et mention de la délivrance du brevet: **18.03.1998**
(21) Numéro de dépôt: 93402048.8
(22) Date de dépôt: 11.08.1993
(51) Int. Cl.: H04B 10/14

(54) **Circuit de prédistortion et source optique semiconductrice incluant ce circuit**
Vorverzerrungsschaltung und optische Halbleiterlichtquelle mit solcher Schaltung
Predistortion circuit and semi-conductor optical source including such a circuit

(30) Priorité: 14.08.1992 FR 9210044
(43) Date de publication de la demande: 23.02.1994
(73) Titulaire: ALCATEL ALSTHOM COMPAGNIE GENERALE D'ELECTRICITE, 74382 Paris Cédex 08 (FR)
(72) Inventeur: Hebert, Jean-Paul, F-78470 Saint-Remy les Chevreuse (FR)
(74) Mandataire: El Manouni, Josiane

(56) Documents cités:
- INTERNATIONAL JOURNAL OF OPTOELECTRONICS vol. 3, no. 6 , 1988 pages 523 - 533 JINGSHOWN WU ET AL 'Linearization of laser-diode nonlinearity for broadband analogue fibre-optic communication'
- PATENT ABSTRACTS OF JAPAN vol. 8, no. 123 (E-249)(1560) 1984 & JP-A-59 036 446 (MATSUSHITA)
- IEEE JOURNAL OF SOLID-STATE CIRCUITS vol. 13, no. 1 , Février 1978 , NEW YORK US pages 133 - 138 ASATANI ET AL 'Linearization of LED Nonlinearity by Predistortions'

## Description

Des sources optiques semiconductrices dont l'émetteur est constitué par une diode laser sont couramment utilisées pour la transmission d'informations dans des fibres optiques. Une telle source fournit alors une onde optique modulée par une information à transmettre portée par un signal d'entrée fourni à cette source. La diode laser reçoit typiquement pour cela un courant d'alimentation électrique constitué par la superposition d'un courant de polarisation continu ou peu variable et d'un courant de commande alternatif de plus petite intensité.

Les variations de ce courant de commande constituent un signal de commande représentatif du signal d'entrée, le sens de ces mots étant précisé par les définitions ci-après qui seront adoptées dans la suite de la présente description:
- Un signal est constitué par une succession temporelle de valeurs, indépendamment de la nature de la grandeur physique qui présente ces valeurs.
- Deux signaux sont en correspondance linéaire lorsque l'un peut être obtenu à partir de l'autre par la combinaison de deux opérations, l'une étant une multiplication par un coefficient constant, l'autre étant une addition ou soustraction d'une valeur constante avec éventuellement un décalage dans le temps.
- Un deuxième signal est représentatif d'un premier si ce premier signal peut être reconstitué à partir du deuxième par application d'une loi de correspondance prédéterminée.
- Un deuxième signal représentatif d'un premier signal présente une distorsion par rapport à ce premier signal dans la mesure où il s'écarte d'un troisième signal qui serait en correspondance linéaire avec ce premier signal. Cette distorsion peut être définie par une loi de distorsion ou de prédistorsion qui est une transformation de valeurs qui, si elle est apliquée à ce troisième signal, le transforme en ce deuxième signal.

En ce qui concerne maintenant les diodes lasers constituant les émetteurs de sources optiques semiconductrices, une courbe caractéristique d'une telle diode représente la variation de l'intensité optique, c'est-à-dire celle de l'intensité de l'onde optique fournie par cette diode, en fonction de l'intensité d'alimentation électrique c'est-à-dire de celle du courant d'alimentation. Elle présente, à partir des intensités d'alimentation faibles, d'abord une partie linéaire s'étendant jusqu'à une intensité de limite de linéarité correspondant typiquement à une puissance optique de sortie voisine de 10 mW. Elle présente ensuite une partie incurvée dans laquelle une variation de l'intensité d'alimentation provoque une variation de l'intensité optique plus faible que si la même variation de cette intensité d'alimentation avait été réalisée dans la partie linéaire.

Si l'intensité du courant de polarisation est proche de l'intensité de limite de linéarité, et si on considère le signal optique constitué par les variations de l'intensité optique, ce défaut de linéarité de la courbe caractéristique provoque une distorsion de ce signal optique par rapport au signal de commande qui lui a donné naissance.

D'autres phénomènes peuvent provoquer une distorsion du signal optique par rapport au signal de commande, par exemple une sensibilité de l'émetteur à la fréquence, c'est-à-dire une modification de la courbe caractéristique de l'émetteur en fonction de la fréquence de composantes de l'intensité électrique.

De telles distorsions deviennent souvent gênantes dans le cas où la modulation appliquée par la source à l'onde optique qu'elle fournit est une modulation d'amplitude, et où le signal de commande est constitué directement par le signal d'entrée. Le souci de les éviter peut amener dans ce cas à limiter l'intensité du courant de polarisation, ce qui présente l'inconvénient de limiter l'intensité optique fournie par la source. Il peut aussi amener à inclure dans la source un circuit de prédistorsion qui reçoit le signal d'entrée et le transforme en un signal de commande tel que le signal optique obtenu finalement soit en correspondance linéaire avec le signal d'entrée.

Des circuits de ce genre sont notamment connus par les documents suivants :
INTERNATIONAL JOURNAL OF OPTOELECTRONICS - vol.3, n°6, 1988, pages 523-533 JINGSHOWN WU ET AL 'Linearization of laser-diode non linearity for broadband analogue fibre-optic communication'; et
IEEE JOURNAL OF SOLID-STATE CIRCUITS - vol.13, n°1, février 1978, NEW YORK US pages 133-138 ASATANI ET AL 'Linearization of LED non linearity by predistortions'. Ils présentent l'inconvénient d'inclure des composants actifs nécessitant un circuit d'alimentation.

Un autre circuit de prédistorsion connu est décrit par le document suivant :
PATENT ABSTRACTS OF JAPAN - vol.8, n°.123 (E-249) (1560) 1984 & JP-A-59 36 446 (MATSUSHITA). Il présente l'inconvénient de ne compenser que partiellement la distorsion des diodes lasers de types connus.

La présente invention a notamment pour but de réaliser de manière simple une source optique semiconductrice capable de fournir une intensité optique élevée tout en ne provoquant qu'une distorsion diminuée. Elle a plus généralement pour but d'améliorer un système de transmission d'information à fibres optiques.

Dans ce but, elle a pour objet un circuit de prédistorsion pour source optique semiconductrice, ce circuit étant apte recevoir un signal d'entrée constitué par une tension électrique et portant une information à transmettre, ce circuit étant apte à appliquer à ce signal d'entrée une prédistorsion transformant ce signal en un signal de commande à appliquer dans un sens direct à une diode semiconductrice constituant un émetteur optique semiconducteur, ce circuit étant caractérisé par le fait qu'il comporte un organe atténuateur à réponse résistive linéaire connecté entre ses bornes en parallèle avec une diode compensatrice pour fournir ledit signal de commande sous la forme des variations de l'intensité électrique d'un courant de commande dont une composante atténuée a traversé cet 4 organe atténuateur et dont une composante compensatrice de même sens a traversé cette diode compensatrice dans un sens direct de celle-ci.

La diode compensatrice présente une courbe caractéristique non linéaire et elle est choisie pour pouvoir être adaptée, avec l'aide de composants simples à réponse linéaire, à la courbe caractéristique non linéaire de l'émetteur, de manière que le signal optique soit sensiblement en correspondance linéaire avec le signal d'entrée.

La présente invention a pour objet aussi une source optique semiconductrice comportant un circuit de prédistortion comme décrit ci-dessus.

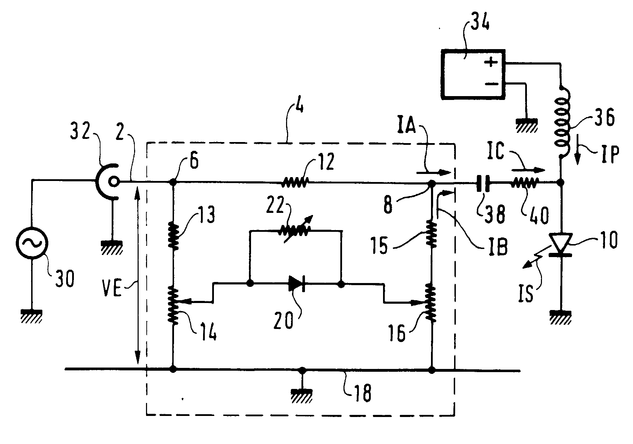

A l'aide de la figure schématique unique ci-jointe, on va décrire plus particulièrement ci-après, à titre d'exemple non limitatif, comment la présente invention peut être mise en oeuvre.

Cette figure représente une source selon cette invention.

De manière générale cette source comporte les éléments suivants, qui sont connus quant à leurs fonctions indiquées ci-après :
- Une borne d'entrée de source 2 pour recevoir sous forme électrique un signal d'entrée VE comportant un ou plusieurs canaux fréquentiels pour représenter une ou plusieurs informations qui sont à transmettre sous forme optique. Ce signal est alternatif. Il est fourni par des organes symbolisés par un générateur de signal 30 et il est transmis jusqu'à la source par une ligne coaxiale 32. Ses fréquences peuvent typiquement atteindre 800 MHz et son amplitude 1 V.
- Un circuit de prédistorsion 4 comportant une borne d'entrée de circuit 6 alimentée par cette borne d'entrée de source pour fournir, sur une borne de sortie de circuit 8, en réponse à ce signal d'entrée VE, un signal de commande IC de nature électrique. Ce signal présente, par rapport au signal d'entrée, une distorsion définie par une loi de prédistorsion.
- Enfin un émetteur optique semiconducteur 10 constitué par une diode laser monomode à réseau distribué.

La partie active de cette diode est une jonction émettrice formée entre deux couches semiconductrices à conductivités de types opposés de part et d'autre d'un ruban actif constituant un guide optique.

Cette diode est polarisée au voisinage de la limite de linéarité de sa courbe caractéristique par un courant de polarisation IP fourni par un circuit de polarisation 34 à travers une inductance de séparation 36. Elle reçoit le signal de commande à travers une capacité de séparation 38 et une résistance de charge 40, de sorte que l'intensité d'alimentation électrique de cette diode dépasse au moins provisoirement la limite de linéarité. Elle émet, en réponse à ce signal de commande, une onde optique dont l'intensité définit, par ses variations, un signal optique de sortie. Ce signal de sortie présente, par rapport au signal de commande, une distorsion définie par une loi de distorsion.

La loi de prédistorsion précédemment mentionnée a été choisie pour être inverse de cette loi de distorsion, de manière que ce signal de sortie soit en correspondance sensiblement linéaire avec ce signal d'entrée.

Le circuit de prédistorsion 4 comporte, entre des bornes d'entrée 6 et de sortie 8, un organe atténuateur linéaire 12, 13, 14, 15, 16 propre à appliquer au signal d'entrée un facteur d'atténuation indépendant de la grandeur de ce signal et valant par exemple 6 à 7dB. Il comporte aussi une diode compensatrice présentant une résistance électrique qui décroit lorsque l'intensité d'un courant électrique qui le traverse croît.

L'organe atténuateur est de préférence, comme représenté, un atténuateur en pi. Il comporte:
- une résistance série 12 connectée entre les bornes d'entrée et de sortie de circuit 6 et 8,
- une résistance parallèle d'entrée 13, 14 connectée entre la borne d'entrée de circuit 6 et une masse électrique 18 de ce circuit,
- et une résistance parallèle de sortie 15, 16 connectée entre la borne de sortie de circuit 8 et cette masse électrique.

La diode compensatrice est par exemple une diode Schottky. Elle est orientée, de même que la diode émettrice 10, pour être traversée dans son sens direct par la composante compensatrice du courant de commande. Elle est connectée aux bornes d'entrée et de sortie de circuit 6 et 8 par l'intermédiaire, notamment, de résistances de réglage série d'entrée 14 et de sortie 16 respectivement, qui constituent des parties des résistances parallèles d'entrée et de sortie de l'atténuateur.

Elle est en outre munie d'une résistance de réglage parallèle 22 connectée entre ses bornes.

Pour faciliter la compréhension, les composantes atténuée et compensatrice du courant de commande ont été symbolisées sur la figure en 1A et 1B respectivement, étant entendu que cette symbolisation ne correspond pas exactement à la répartition réelle des intensités dans le circuit représenté, mais que cette répartition réelle peut être aisément calculée exactement par l'homme du métier.

Les résistances inclues dans le circuit prédistorsion 4 ont par exemple les valeurs suivantes:
résistance 12 : 56 ohms
résistance 13 : 120 ohms
résistance 14 : 100 ohms
résistance 15 : 120 ohms
résistance 16 : 100 ohms
résistance 22 : 470 ohms

La présente invention permet d'obtenir une amélioration de linéarité caractérisée par une diminution de l'ordre de 10dB des composantes d'intermodulation primaire qui apparaissent lorsqu'un signal d'entrée ayant plusieurs fréquences porteuses est appliqué à un dispositif à réponse non linéaire, de telles composantes étant internationalement appelées CSO pour Composite-Second-Order (second ordre composite).

## Revendications

1. Circuit de prédistorsion pour source optique semiconductrice, ce circuit étant apte à recevoir un signal d'entrée (VE) constitué par une tension électrique et portant une information à transmettre, ce circuit étant apte à appliquer à ce signal d'entrée une prédistorsion transformant ce signal en un signal de commande (IC), à appliquer dans un sens direct à une diode semiconductrice constituant un émetteur optique semiconducteur (10),
ce circuit (4) étant caractérisé par le fait qu'il comporte un organe atténuateur (12) à réponse résistive linéaire connecté entre ses bornes (6, 8) en parallèle avec une diode compensatrice (20) pour foumir ledit signal de commande (IC) sous la forme des variations de l'intensité électrique d'un courant de commande dont une composante atténuée (lA) a traversé cet organe atténuateur et dont une composante compensatrice (IB) de même sens a traversé cette diode compensatrice dans un sens direct de celle-ci.

2. Circuit selon la revendication 1, ce circuit comportant :
- une borne d'entrée de circuit (6) pour recevoir ledit signal d'entrée (VE),
- une borne de sortie de circuit (8) pour foumir ledit signal de commande (IC) en réponse à ce signal d'entrée, ce signal de commande présentant par rapport à ce signal d'entrée, une distorsion définie par une loi de prédistorsion,
- ledit organe atténuateur (12, 13, 14, 15, 16) entre lesdites bomes d'entrée (6) et de sortie (8) de circuit,
- et ladite diode compensatrice (20) entre lesdites bomes d'entrée (6) et de sortie (8) de circuit, cette diode présentant une résistance électrique qui décroît lorsque l'intensité d'un courant électrique qui la traverse croît.

3. Circuit selon la revendication 2, caractérisé par le fait que ladite diode compensatrice (20) est une diode Schottky.

4. Circuit selon la revendication 2, caractérisé par le fait que ledit organe atténuateur est un atténuateur en pi comportant :
- une résistance série (12) connectée entre lesdites bornes d'entrée (6) et de sortie (8) de circuit,
- une résistance parallèle d'entrée (13, 14) connectée entre ladite bome d'entrée de circuit (6) et une masse électrique (18) de ce circuit,
- et une résistance parallèle de sortie (15, 16) connectée entre ladite bome de sortie (8) et cette masse électrique.

5. Circuit selon la revendication 2, caractérisé par le fait que ladite diode compensatrice (20) est connectée auxdites bornes d'entrée et de sortie de circuit par l'intermédiaire de résistances de réglage série d'entrée (14) et de sortie (16), respectivement.

6. Circuit selon la revendication 2, caractérisé par le fait que ladite diode compensatrice (20) est munie d'une résistance de réglage parallèle (22) connectée entre ses bornes.

7. Source optique semiconductrice comportant un circuit de prédistorsion selon l'une quelconque des revendications 2 à 6,
cette source comportant en outre un dit émetteur semiconducteur (10), cet émetteur recevant ledit signal de commande et fournissant en réponse un signal optique de sortie présentant par rapport à ce signal de commande, une distorsion définie par une loi de distorsion, ladite loi de prédistorsion étant une loi inverse de cette loi de distorsion de manière que ce signal optique de sortie soit sensiblement en correspondance linéaire avec ledit signal d'entrée.

## Patentansprüche

1. Vorverzerrungsschaltung für eine optische Halbleiterquelle, wobei die Schaltung in der Lage ist, ein Eingangssignal (VE) zu empfangen, das durch eine elektrische Spannung gebildet ist und eine zu übertragende Information trägt, wobei die Schaltung in der Lage ist, auf dieses Eingangssignal eine Vorverzerrung auszuüben, die dieses Signal in ein Steuersignal (IC) zum Anlegen in einer Durchgangsrichtung an eine Halbleiterdiode umformt, die einen optischen Halbleitersender (10) bildet,
wobei die Schaltung dadurch gekennzeichnet ist, daß sie ein Abschwächungselement (12) mit linearer Widerstandsantwort umfaßt, das zwischen seinen Anschlüssen (6, 8) mit einer Kompensationsdiode (20) parallel geschaltet ist, um das Steuersignal (IC) in Form von Veränderungen der elektrischen Intensität eines Steuerstromes zu liefern, von dem eine abgeschwächte Komponente (IA) das Abschwächungselement durchlaufen hat und von dem eine Kompensationskomponente (IB) in gleicher Richtung die Kompensationsdiode in einer Durchgangsrichtung von dieser durchlaufen hat.

2. Schaltung nach Anspruch 1 mit:
- einem Schaltungseingangsanschluß (6) zum Empfangen des Eingangssignales (VE),
- einem Schaltungsausgangsanschluß (8) zum Liefern des Steuersignales (IC) in Reaktion auf dieses Eingangssignal, wobei das Steuersignal im Verhältnis zum Eingangssignal eine durch eine Vorverzerrungsregel definierte Verzerrung aufweist,
- dem Abschwächungselement (12, 13, 14, 15, 16) zwischen Schaltungseingangsanschluß (6) und -ausgangsanschluß (8),
- und der Kompensationsdiode (20) zwischen Schaltungseingangsanschluß (6) und -ausgangsanschluß (8), wobei die Diode einen elektrischen Widerstand aufweist, der abnimmt, wenn die Intensität eines sie durchfließenden elektrischen Stromes zunimmt.

3. Schaltung nach Anspruch 2, dadurch gekennzeichnet, daß die Kompensationsdiode (20) eine Schottkydiode ist.

4. Schaltung nach Anspruch 2, dadurch gekennzeichnet, daß das Abschwächungselement ein pi-Abschwächer ist mit:
- einem zwischen Schaltungseingangsanschluß (6) und -ausgangsanschluß (8) geschalteten Reihenwiderstand (12),
- einem zwischen den Schaltungseingangsanschluß (6) und eine elektrische Masse (18) dieser Schaltung geschalteten parallelen Eingangswiderstand (13, 14),
- und einem zwischen den Ausgangsanschluß (8) und die elektrische Masse geschalteten parallelen Ausgangswiderstand (15, 16).

5. Schaltung nach Anspruch 2, dadurch gekennzeichnet, daß die Kompensationsdiode (20) an Schaltungseingangs- und -ausgangsanschluß über Eingangs- bzw. Ausgangs-Reihenregelwiderstände geschaltet ist.

6. Schaltung nach Anspruch 2, dadurch gekennzeichnet, daß die Kompensationsdiode mit einem zwischen ihre Anschlüsse geschalteten parallelen Regelwiderstand (22) versehen ist.

7. Optische Halbleiterquelle mit einer Vorverzerrungsschaltung nach einem der Ansprüche 2 bis 6, wobei dieses Quelle ferner einen sogenannten Halbleitersender (10) umfaßt, dieser Sender das Steuersignal empfängt und in Reaktion ein optisches Ausgangssignal liefert, das in Bezug zu dem Steuersignal eine durch eine Verzerrungsregeh definierte Verzerrung aufweist, wobei die Vorverzerrungsregel eine der Verzerrungsregel entgegengesetzte Regel ist, so daß das optische Ausgangssignal im wesentlichen in linearer Entsprechung mit dem Eingangssignal ist.

## Claims

1. A predistortion circuit for a semiconductor light source said circuit being adapted to receive an input signal (VE) constituted by an electrical voltage and carrying information to be transmitted, said circuit being adapted to apply predistortion to the input signal, transforming the signal into a control signal (IC) to be applied in a forward direction to a semiconductor diode constituting a semiconductor light emitter (10);
said circuit (4) being characterized by the fact that between its terminals (6, 8) it includes an attenuator member (12) having a linear resistive response, in parallel with a compensating diode (20) to provide said control signal (IC) in the form of variations in an electrical control current having an attenuated component (IA) that has passed through said attenuator member and in which a compensating component (IB) of the same sign has passed through said compensating diode in the forward direction thereof.

2. A circuit according to claim 1, said circuit including:
a circuit input terminal (6) for receiving said input signal (VE);
a circuit output terminal (8) for delivering said control signal (IC) in response to said input signal, the control signal presenting distortion relative to said input signal, which distortion is defined by a predistortion relationship;
said attenuator member (12, 13, 14, 15, 16) between said circuit input and output terminals (6, 8); and
said compensating diode (20) between said circuit input and output terminals (6, 8), said diode presenting electrical resistance that decreases with increasing current passing therethrough.

3. A circuit according to claim 2, characterized by the fact that said compensating diode (20) is a Schottky diode.

4. A circuit according to claim 2, characterized by the fact that attenuator member is a pi attenuator comprising:
a series resistance (12) connected between said circuit input and output terminals (6, 8);
an input parallel resistance (13, 14) connected between said circuit input terminal (6) and electrical ground (18) of said circuit; and
an output parallel resistance (15, 16) connected between said output terminal (8) and said electrical ground.

5. A circuit according to claim 2, characterized by the fact that said compensating diode (20) is connected to said circuit input and output terminals via an input series adjustment resistance (14) and an output series adjustment resistance (16), respectively.

6. A circuit according to claim 2, characterized by the fact that said compensating diode (20) is provided with a parallel adjustment resistance (22) connected across its terminals.

7. A semiconductor light source including a predistorsion circuit according to any one of claims 2 to 5,
said source further including a said semiconductor light emitter (10) said emitter receiving said control signal and providing in response an output light signal presenting distortion relative to said control signal, which distortion is defined by a distortion relationship, said predistortion relationship being the inverse of said distortion relationship such that said output light signal is substantially in linear correspondence with said input signal.
